# FASCICULE DE BREVET EUROPEEN

(11) **EP 1 303 071 B1**
(45) Date de publication et mention de la délivrance du brevet: **31.08.2005**
(21) Numéro de dépôt: 02292483.1
(22) Date de dépôt: 08.10.2002
(51) Int. Cl.: H04L 1/00

(54) **Procédé et dispositif de sélection automatique du débit dans des transmissions haute fréquence**
Verfahren und Vorrichtung zur automatischen Ratenauswahl für Hochfrequenzübertragungen
Method and device for rate automatic selection in high frequency transmissions

(30) Priorité: 09.10.2001 FR 0112979
(43) Date de publication de la demande: 16.04.2003
(73) Titulaire: Thales, 75008 Paris (FR)
(72) Inventeur: Bruas, Patrick, Thales Intellectual Property, 94117 Arcueil cedex (FR)
(74) Mandataire: Dudouit, Isabelle

(56) Documents cités:
- EP-A- 1 085 687
- US-B1- 6 215 818
- US-B1- 6 263 077
- REDDING C ET AL: "Adaptive HF radio test results using real-time channel evaluation systems" MILITARY COMMUNICATIONS CONFERENCE, 1994. MILCOM '94. CONFERENCE RECORD, 1994 IEEE FORT MONMOUTH, NJ, USA 2-5 OCT. 1994, NEW YORK, NY, USA,IEEE, US, 2 octobre 1994 (1994-10-02), pages 890-894, XP010149834 ISBN: 0-7803-1828-5

## Description

L'objet de l'invention concerne un dispositif et un procédé pour la sélection d'un paramètre de trafic tel que le débit pour les transmissions en gamme HF (haute fréquence ou High Frequency en anglo-saxon) utilisant un modem avec égaliseur.

L'invention s'applique notamment pour l'ensemble des communications numériques en gamme HF utilisant un modem série avec égaliseur quelle que soit sa forme d'onde, quel que soit le trafic supporté, par exemple les données (data), la phonie numérisée, le mode FEC (Forward Error Correction), le mode ARQ (Automatic Request Query) et quel que soit le type de liaison par exemple le mode half-duplex, full-duplex, les liaisons point-à-point ou point-à-multipoint.

Dans la suite de la description, l'expression « paramètres de trafic » désigne un ou plusieurs des paramètres de la liste suivante : la fréquence, le débit de transmission des données utiles, la forme d'onde, l'entrelaceur et/ou la puissance.

De même, l'expression « paramètres de propagation » recouvre par exemple, le rapport signal/bruit ou SNR (Signal-to-Noise Ratio), la nature et le niveau des interférences, l'étalement Doppler, l'étalement temporel, la dynamique des trajets multiples, le décalage et la rampe Doppler.

Dans le domaine des transmissions numériques en gamme HF la propagation par réflexion ionosphérique utilise un medium non stationnaire, extrêmement fluctuant dans le temps et dans l'espace avec des variations de paramètres de propagation, tels que ceux précités, à court terme et à long terme.

L'avènement des modems série (ou single-tone modem en anglais) avec égaliseur a permis d'augmenter le débit utilisateur dans les communications numériques. L'égaliseur permet de combattre les variations rapides du canal et notamment les évanouissements (ou fading) de l'enveloppe du signal reçu.

La bande passante du canal est aussi variable et les protocoles ALE (abréviation anglo-saxone de Automatic Link Establishment) permettent de sélectionner automatiquement une fréquence libre et passante comprise entre la plus petite fréquence utilisable LUF (Lowest Usable Frequency) et la fréquence maximale MUF (Maximum Usable Frequency) afin d'assurer une qualité de service ou QoS au point du récepteur, pour le trafic de données qui suit la phase d'ALE.

Le médium de transmission étant variable, le mode de transmission HF doit pouvoir s'adapter. Cela implique de sélectionner, en début de liaison et en cours de liaison, les paramètres de trafic les mieux adaptés aux caractéristiques de propagation du canal du bruit ou de brouillage (au site récepteur) en fonction par exemple de la qualité de service demandée par l'utilisateur. Les paramètres de trafic sélectionnés sont notamment la fréquence, le débit, la forme d'onde, l'entrelaceur et/ou la puissance.

Pour cela, l'art antérieur décrit différentes procédures adaptatives qui peuvent être classées en plusieurs catégories selon le paramètre du trafic qui est adapté et la nature du procédé, c'est-à-dire la prédiction ou l'estimation du canal de propagation.

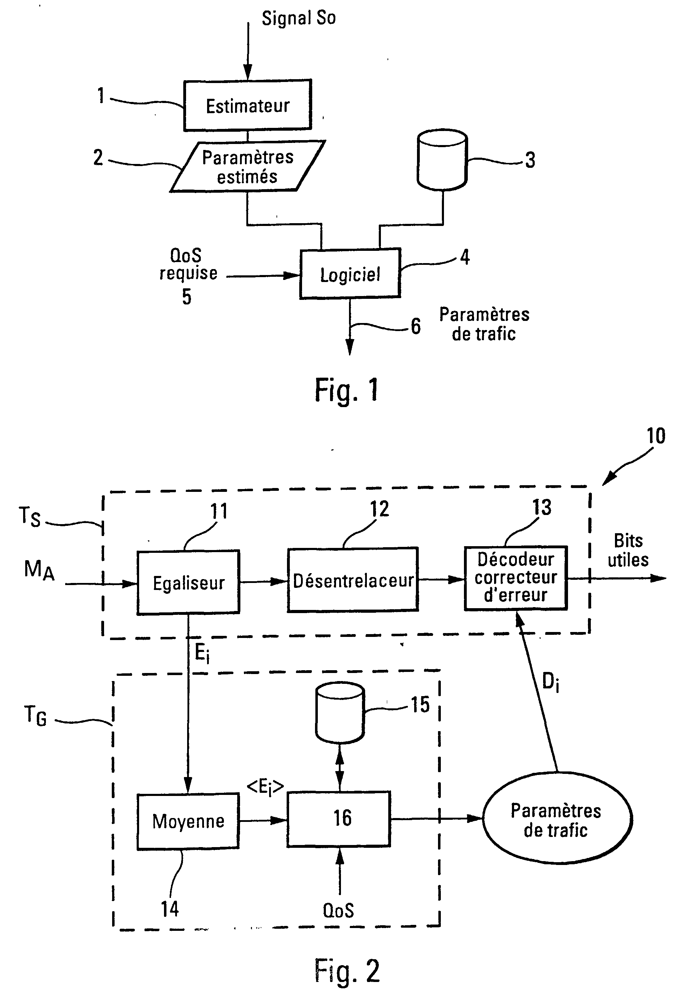

La figure 1 schématise une manière de procéder selon l'art antérieur qui met en oeuvre une forme d'onde.

Le signal S₀ reçu par le modem après transmission à travers l'ionosphère est traité dans un estimateur 1 de canal ayant notamment pour fonction, d'extraire en utilisant un algorithme plus ou moins complexe (par exemple de type MUSIC (Multiple Signal Classification)) les paramètres estimés 2 de propagation pendant la réception de la forme d'onde de sondage. Un logiciel de gestion 4 réalise un traitement dit de « matching process » en croisant ces paramètres estimés avec des courbes de performances obtenues pour différents types de modems et mémorisées dans une ou plusieurs bases de données 3. Il détermine ensuite, en fonction par exemple d'une qualité de service requise QoS, 5, un jeu 6 de paramètres de trafic à mettre en oeuvre. Ainsi, le procédé détermine la valeur de débit optimum pour transmettre des données.

Sous le terme qualité de service ou QoS, on désigne par exemple le taux d'erreur binaire (TEB), le délai bout-en-bout de la chaîne de transmission, etc. Le jeu de paramètres de trafic comporte par exemple comme paramètres, la forme d'onde utilisée pour la transmission des données, le débit utilisateur, la longueur de l'entrelaceur, ou tout autre paramètre de trafic.

Un tel système est toutefois compliqué et requiert de la puissance CPU et de la taille mémoire, les courbes de performances étant multidimensionnelles. Ainsi, pour un débit donné Di de transmission, le taux d'erreur binaire, TEB, est exprimé en fonction du rapport signal/bruit, de la valeur de l'étalement Doppler et de l'étalement temporel de chaque trajet, de l'amplitude et du nombre de ces trajets, etc. Par ailleurs, un algorithme d'estimation de canal qui manquerait de haute résolution se traduirait par une incertitude sur le taux d'erreur binaire dans un rapport de 1 à 100. Cette méthode indirecte qui consiste à séparer l'estimation des paramètres de propagation et les tables de performances se révèle donc complexe et peu efficace.

Une autre technique plus simple consiste à réduire les paramètres de propagation au simple rapport signal/bruit, SNR. Cette technique s'avère toutefois inopérante en présence de multi-trajets. En effet, le rapport signal/bruit n'est pas représentatif de la qualité de service pour un médium ionosphérique. Il existe une dispersion importante de qualité de service QoS pour un SNR fixé lorsque l'on fait varier l'étalement Doppler et/ou l'étalement temporel.

Le brevet EP 1 085 687 concerne le contrôle de lignes dans un système de communication numérique. Le procédé consiste à recevoir les trames d'information numérique, à calculer une mesure du nombre de trames reçues en erreur dans la fenêtre temporelle glissante et à générer une commande pour régler le débit en fonction de cette mesure.

L'objet de l'invention repose sur une nouvelle approche qui consiste notamment à coupler une information de « qualité brute » associée au canal de propagation avec un protocole de sélection automatique d'un paramètre représentatif de la qualité de service souhaitée. Le procédé repose notamment sur l'estimation du canal de propagation en temps réel, en déterminant l'erreur d'égalisation estimée et en déduisant la valeur du débit en fonction de la qualité de service requise fournie au niveau du modem.

L'invention concerne un procédé pour déterminer au moins un paramètre de trafic dans un système de transmission de données comportant au moins un émetteur et un récepteur, ledit récepteur comportant un modem avec égaliseur. Il est caractérisé en ce qu'il comporte au moins les étapes suivantes :
- déterminer au moins une donnée fournie par l'égaliseur telle que l'erreur d'égalisation Eᵢ,
- déterminer un ou plusieurs paramètres de trafic en tenant compte de la donnée fournie, d'une qualité de service QoS fixée et d'une relation reliant la qualité de service et l'erreur d'égalisation Eᵢ.

Le paramètre de trafic déterminé est par exemple le débit Di de transmission.

Le procédé comporte par exemple une étape où la valeur de l'erreur d'égalisation est moyennée.

La relation liant la qualité de service QoS requise et l'erreur d'égalisation Eᵢ peut être donnée sous la forme d'une base de donnée obtenue pour différents modems avec égaliseurs, la base de données étant préétablie ou construite en cours de fonctionnement.

La relation est par exemple composée de différentes valeurs de débit correspondant à des intervalles de valeurs données de TEB et d'erreur d'égalisation moyennée.

Le procédé peut utiliser un protocole de type ALE permettant d'obtenir plusieurs couples fréquence, débit et une étape de sélection d'une valeur de fréquence et/ou d'une valeur de débit en fonction de critères de décision.

Les signaux échangés se présentent par exemple sous la forme d'une trame comportant un préambule de trafic et en ce que le paramètre de trafic déterminé est transmis dans la forme d'onde disponible dans le préambule.

L'invention concerne aussi un dispositif adapté à mettre en oeuvre le procédé selon l'invention et comportant au moins un modem avec égaliseur caractérisé en ce qu'il comporte une carte de gestion adaptée à déterminer un ou plusieurs paramètres de trafic en tenant compte de l'erreur d'égalisation Eᵢ fournie par l'égaliseur, d'une valeur de qualité de service QoS fixé et d'une relation reliant la qualité de service QoS et l'erreur d'égalisation Eᵢ.

L'invention présente notamment les avantages suivants :
- offrir un dispositif simple et fiable de couplage entre la couche physique et la couche liaison qui permet de suivre les variations temporelles lentes du médium de transmission,
- utiliser de façon optimum un modem, afin d'exploiter au mieux durant chaque mois de l'année la fonction de densité de probabilité du niveau moyen de signal reçu, de manière à avoir un débit très élevé en moyenne mensuelle par rapport à un système non adaptatif en débit,
- ne pas consommer de ressource radio, si ce n'est l'émission d'un préambule en général un peu plus long que nécessaire (entre une et quelques secondes) de manière à fiabiliser la moyenne de l'estimateur du canal ; en effet, le paramètre tel que le débit à régler automatiquement avant et en cours de transmission est transmis dans la forme d'onde déjà disponible du préambule de trafic,
- éviter l'extraction des paramètres de propagation,
- permettre, pour une fréquence de trafic donnée, de sélectionner automatiquement la valeur du débit qui corresponde à une qualité de service requise, indépendamment des conditions de propagation et quelles que soient les formes d'onde série utilisées pour le préambule et le trafic.

D'autres caractéristiques et avantages de l'invention apparaîtront mieux à la lecture de la description d'exemples de réalisation donnés à titre illustratif et nullement limitatifs qui représentent :
- La figure 1 un schéma décrivant les étapes mises en oeuvre selon l'art antérieur,
- La figure 2 un dispositif de réception selon l'invention et les interactions entre ses différents éléments,
- La figure 3 un exemple de courbes permettant de déterminer les seuils de décision utilisés dans le procédé,
- La figure 4 un synoptique des échanges de données entre un appelant et un appelé et la figure 5 les mêmes échanges au niveau des cartes de traitement.

Afin de mieux faire comprendre le principe mis en oeuvre dans l'invention, les exemples de réalisation qui suivent sont donnés, à titre non limitatif, pour sélectionner automatiquement la valeur de débit Di des données pour les transmissions en gamme HF, en utilisant la valeur d'erreur d'égalisation Eᵢ, estimée et moyennée éventuellement, obtenue par un modem série avec égaliseur.

La figure 2 décrit un exemple de dispositif de réception permettant de mettre en oeuvre les différentes étapes du procédé selon l'invention. Le message transmis M_{A} est reçu, après avoir traversé l'ionosphère, dans un modem 10 comportant une carte de traitement de signal TS et une carte de gestion TG communiquant entre elles. La carte de traitement de signal TS comporte par exemple un égaliseur 11, un désentrelaceur 12 et un décodeur correcteur d'erreur 13. La carte de gestion TG comporte éventuellement un dispositif de moyennage 14 adapté à effectuer une moyenne d'un paramètre, une base de données 15 et un logiciel 16 adapté à déterminer différents paramètres de trafic.

Le signal M_{A} est transmis à l'égaliseur 11 qui le traite pour déterminer la valeur de l'erreur d'égalisation Eᵢ. Cette valeur Eᵢ est transmise à la carte de gestion TG qui, à l'aide d'un logiciel adapté, effectue une moyenne <Eᵢ> par exemple sur plusieurs trames modems consécutives durant la réception du préambule par le destinataire du trafic. Le logiciel 16 déduit à partir de cette valeur moyennée <Ei>, de la base de données 15 et de la connaissance du ou des paramètres de qualité de service à respecter la valeur de débit optimum qui va être utilisée pour transmettre les données M_{T}, par exemple le débit initial du trafic qui suit le protocole d'appel avec acquittement. Les paramètres de trafic ainsi déterminés, par exemple le débit, sont transmis vers la carte de traitement de signal TS.

D'autre part, le signal M_{A} passe à travers un désentrelaceur 12, puis un décodeur correcteur d'erreur 13 qui reçoit aussi la valeur du débit optimum Di issue de la carte de gestion TG. La carte de traitement de signal TS émet ainsi les bits utiles comportant la valeur du débit et les données représentatives de l'information à transmettre.

Le signal échangé et transmis se présente par exemple sous la forme d'une trame comprenant un préambule et une zone destinée aux informations. La forme d'onde utilisée pour le signal transmis inclut par exemple une séquence d'apprentissage, i.e, des symboles de modulation connus répartis dans la forme d'onde en bloc de « synchro-trame » (Initial Training Sequence en terminologie anglo-saxone) et ou « mini-probes ». Le modem utilisé du côté récepteur est par nature multi-débit. La forme d'onde peut être de type STANAG 4285 (norme OTAN, STANdardization AGreement), STANAG 4539, ou tout autre mode avec modem haut-débit utilisé en mode multiservice.

La base de données 15 contient par exemple des seuils de décision utilisés pour sélectionner le débit en fonction du Taux d'erreur binaire TEB et de la valeur de l'erreur d'égalisation estimée.

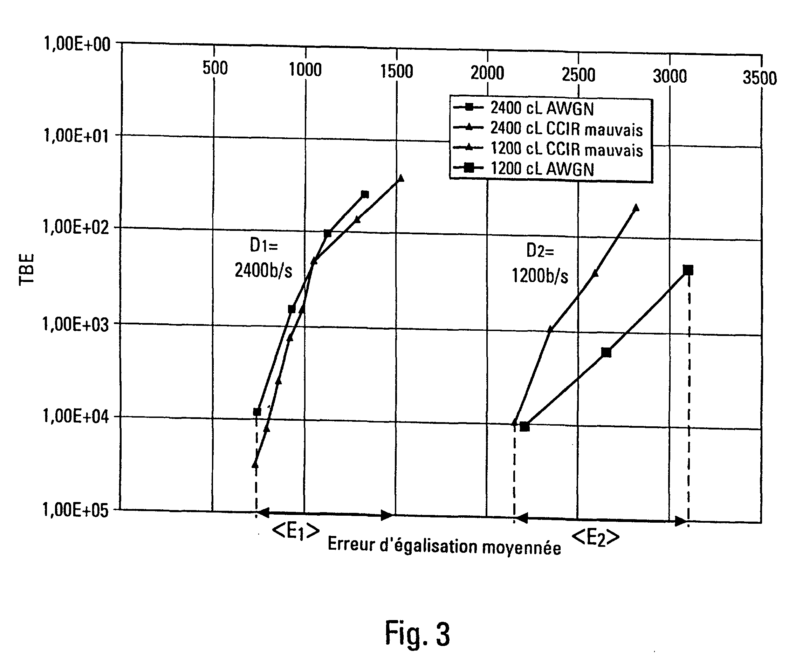

La figure 3 représente deux courbes correspondant chacune à une valeur de débit D₁, D₂. Ces courbes de débit ont été obtenues pour un canal de propagation à bruit blanc additif gaussien ou AWGN (Additive White Gaussian Noise) et un canal de propagation non stationnaire dit « Poor CCIR » à 2 trajets espacés de 1 ms de même amplitude qui varient selon des lois de Rayleigh indépendantes avec un étalement Doppler (mesure de la rapidité de l'évanouissement) de 1 Hz chacun.

A chacune de ces courbes D₁, D₂ est associé un intervalle <E₁>, <E₂> de valeurs pour l'erreur d'égalisation estimée moyennée. Cette valeur d'erreur est normalisée par la puissance du signal reçu. La plage de variation de cette erreur d'égalisation dépend par exemple de l'implémentation.

Ainsi, en fonction de la valeur <Eᵢ> mesurée et du taux d'erreur TEB à respecter, le logiciel de la carte gestion TG détermine la valeur de débit Di optimum. Sur la figure 3 les valeurs de débit D₁, D₂ correspondent à 1200 b/s et 2400 b/s.

Ces courbes sont obtenues pour plusieurs types de modem et mémorisées dans la table ou base de données.

Avantageusement, la durée du préambule de la trame est fixée pour durer suffisamment longtemps, par exemple on choisira une valeur de une seconde minimum pour diminuer la variance de la mesure et intégrer le phénomène de fading rapide par exemple.

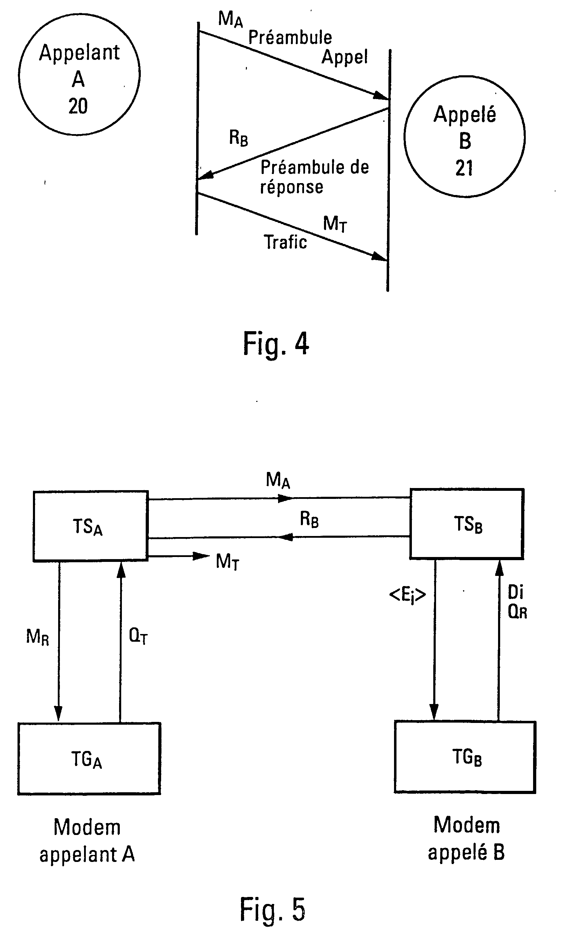

Les figures 4 et 5 schématisent un synoptique du protocole d'échange entre un appelant A et un appelé B utilisant le procédé selon l'invention. Ce protocole d'échange est composé par exemple d'un protocole dit de pré-sondage (message M_{A} préambule d'appel de A vers B et message R_{B} de préambule de réponse de B vers A) pendant lequel notamment on détermine les paramètres de trafic à utiliser, suivi d'un protocole de transmission des données (message M_{T} de A vers B).

Le protocole de présondage comporte un préambule d'appel M_{A} transmis d'un appelant A utilisant un modem 20 vers un destinataire B lui-même équipé d'un modem 21, et un préambule de réponse R_{B} de B vers A qui contient les données et les paramètres de trafic déterminés en suivant les étapes du procédé selon l'invention. Chacun des modems est équipé d'une carte de traitement de signal respectivement notée TS_{A}, TS_{B} et d'une carte de gestion respectivement TG_{A}, TG_{B} qui communiquent entre elles suivant les séquences décrites ci-après (figure 5).

A la réception de l'appel M_{A} émis par A, la carte de traitement de signal TS_{B} détermine l'estimée <Eᵢ> de la valeur d'erreur d'égalisation, qu'il peut moyenner, et transmet cette valeur à la carte de gestion TG_{B}. Cette dernière détermine la valeur de débit optimum Di pour la transmission des données, en utilisant la valeur de taux d'erreur TEB requise, la valeur <Ei> et les bases de données donnant la relation entre TEB et <Ei>, précitée par exemple à la figure 3.

Ce paramètre Di est transmis, simultanément à une requête d'émission Q_{R} de la réponse de TG_{B} vers TS_{B}. La carte de traitement de signal TS_{B} envoie une réponse R_{B} vers l'appelant A, reçue par la carte de traitement de signal TS_{A}. Cette carte TS_{A} envoie un signal « message reçu » M_{R} à la carte de gestion TG_{A} qui dispose alors de la valeur de débit optimum Di qu'elle doit utiliser pour transmettre les données dans la suite du trafic. La carte TG_{A} émet alors une requête Q_{T} d'émission de trafic contenant les données et la configuration du modem à savoir les valeurs de paramètres de trafic à utiliser pour les messages M_{T} émis de A vers B.

Sans sortir du cadre de l'invention, le procédé est intégré dans un protocole de recherche automatique de type ALE (Automatic Link Establishment). Un tel protocole permet notamment de rechercher une fréquence de trafic libre et passante qui satisfasse un critère d'acceptation à partir du « matching process» décrit dans le procédé, i.e. correspondance entre l'erreur d'égalisation moyennée et les paramètres de trafic tels que la forme d'onde, la valeur de débit, l'entrelaceur qui permettent d'obtenir la qualité de service requise.

Pour cela, du côté de l'appelé, le procédé détermine pour chacune des fréquences Fi à déterminer, la valeur de débit Qi en utilisant la valeur de l'erreur d'égalisation Eᵢ. Ceci conduit à plusieurs valeurs de couples (F₁, D₁), (F₂, D₂),.....et à appliquer à ces différents couples un critère d'acceptation de la fréquence ou de la valeur de débit.

Par exemple, en prenant comme QoS une valeur de taux d'erreur TEB de l'ordre de 10⁻⁴ et en fixant initialement la forme d'onde et l'entrelaceur, on peut choisir comme critère d'accepter la première fréquence pour laquelle le débit (en sortie de la table de correspondance) est supérieur à un seuil de débit donné. Pour une forme d'onde de canalisation audio, cela correspond à 1200 b/s utile FEC.

Le procédé et le dispositif selon l'invention s'appliquent par exemple aux trois types suivants de transmission et de trafic multidébit :
- Les transmissions de données « sans erreur » avec protocole ARQ (Automatic Request Query),
- Les transmissions de données en FEC (Forward Error Correction), débit compris entre débit_min et débit_max avec par exemple débit_min≥75bps et débit_max ≤9600 bps,
- La transmission de phonie vocodée chiffrée, débit égal à 800 ou 2400 b/s typiquement pour les STANAGs respectifs 4479 et 4198 (LPC10e).

Pour ces trois types de trafic, le dispositif selon l'invention permet d'adapter le débit en choisissant, au moment de la prise de liaison (préambule d'appel avec réponse qui acquitte l'appel) le débit utilisateur qui satisfait le mieux la qualité de service requise :
- Choix automatique du débit initial de la transmission ARQ,
- Choix automatique du débit FEC,
- Choix automatique du vocodeur.

Sans sortir du cadre de l'invention le procédé et le dispositif décrits précédemment peuvent utiliser n'importe quelle forme d'onde de trafic, telles que modem OFDM, modem FSK, modem à étalement de spectre, canalisation différente, etc, après la phase d'appel-réponse. La phase d'appel-réponse seule utilise un modem avec égaliseur.

## Revendications

1. Procédé pour déterminer au moins un paramètre de trafic dans un système de transmission de données comportant au moins un émetteur et un récepteur, ledit récepteur comportant un modem avec égaliseur, le procédé comportant une étape où l'on détermine au moins une donnée fournie par l'égaliseur telle que l'erreur d'égalisation Eᵢ, et une étape où l'on détermine un ou plusieurs paramètres de trafic en tenant compte de la donnée fournie, de la qualité de service fixée et d'une relation liant la qualité de service et l'erreur d'égalisation Ei **caractérisé en ce que** ladite relation est donnée sous la forme d'une base de données obtenues pour différents modems avec égaliseur, la base de données étant préétablie ou construite au cours du fonctionnement.

2. Procédé selon la revendication 1 **caractérisé en ce que** le paramètre de trafic est le débit Di de transmission.

3. Procédé selon l'une des revendications 1 et 2 **caractérisé en ce qu'**il comporte une étape où la valeur de l'erreur d'égalisation Eᵢ est moyennée <Eᵢ>.

4. Procédé selon l'une des revendications 1 à 3 **caractérisé en ce que** la relation est composée de différentes valeurs de débit correspondant à des intervalles de valeurs données de taux d'erreur binaire et d'erreur d'égalisation moyennée <Eᵢ>

5. Procédé selon l'une des revendications 1 à 4 **caractérisé en ce qu'**il utilise un protocole de type sélection automatique de fréquence permettant d'obtenir plusieurs couples fréquence, débit et une étape de sélection d'une valeur de fréquence et/ou d'une valeur de débit en fonction de critères de décision.

6. Procédé selon l'une des revendications 1 à 5 **caractérisé en ce que** les signaux échangés se présentent sous la forme d'une trame comportant un préambule de trafic et **en ce que** le paramètre de trafic déterminé est transmis dans la forme d'onde disponible dans le préambule.

7. Dispositif pour déterminer au moins un paramètre de trafic dans un système de transmission de données comportant au moins un émetteur et au moins un récepteur, le récepteur comportant au moins un modem (10) avec égaliseur (11) le dispositif comportant une carte de gestion (TG) adaptée à déterminer un ou plusieurs paramètres de trafic en tenant compte de l'erreur d'égalisation Eᵢ fournie par l'égaliseur (11), d'une valeur de qualité de service fixée et d'une relation reliant la qualité de serveur et l'erreur d'égalisation Eᵢ **caractérisé en ce que** ladite relation est donnée sous la forme d'une base de données obtenues pour différents modems avec égaliseur, la base de données étant préétablie ou construite au cours du fonctionnement.

8. Utilisation du procédé selon l'une des revendications 1 à 6 pour les transmissions de données en gamme HF.

## Patentansprüche

1. Verfahren zur Bestimmung mindestens eines Verkehrsparameters in einem Datenübertragungssystem, das mindestens einen Sender und einen Empfänger aufweist, wobei der Empfänger ein Modem mit Entzerrer aufweist, wobei das Verfahren einen Schritt, in dem mindestens ein vom Entzerrer gelieferter Datenwert, wie zum Beispiel der Entzerrungsfehler Eᵢ, bestimmt wird, und einen Schritt aufweist, in dem einer oder mehrere Verkehrsparameter unter Berücksichtigung des gelieferten Datenwerts, der festgelegten Dienstqualität und einer die Dienstqualität und den Entzerrungsfehler Eᵢ verbindenden Beziehung bestimmt werden, **dadurch gekennzeichnet, dass** die Beziehung in Form einer Bank von Daten angegeben wird, die für verschiedene Modems mit Entzerrer erhalten wurden, wobei die Datenbank vorerstellt oder während des Betriebs aufgebaut wird.

2. Verfahren nach Anspruch 1, **dadurch gekennzeichnet, dass** der Verkehrsparameter der Übertragungsdurchsatz Di ist.

3. Verfahren nach einem der Ansprüche 1 und 2, **dadurch gekennzeichnet, dass** es einen Schritt aufweist, in dem der Wert des Entzerrungsfehlers Eᵢ gemittelt wird <Eᵢ>.

4. Verfahren nach einem der Ansprüche 1 bis 3, **dadurch gekennzeichnet, dass** die Beziehung aus verschiedenen Durchsatzwerten zusammengesetzt ist, die Intervallen von gegebenen Werten einer binären Fehlerhäufigkeit und eines gemittelten Entzerrungsfehlers <Eᵢ> entsprechen.

5. Verfahren nach einem der Ansprüche 1 bis 4, **dadurch gekennzeichnet, dass** es ein Protokoll von der Art automatische Frequenzwahl, das es ermöglicht, mehrere Frequenz-Durchsatz-Paare zu erhalten, und einen Schritt der Auswahl eines Frequenzwerts und/oder eines Durchsatzwerts in Abhängigkeit von Entscheidungskriterien verwendet.

6. Verfahren nach einem der Ansprüche 1 bis 5, **dadurch gekennzeichnet, dass** die ausgetauschten Signale in Form eines Rahmens vorliegen, der eine Verkehrspräambel aufweist, und dass der bestimmte Verkehrsparameter in der in der Präambel verfügbaren Wellenform übertragen wird.

7. Vorrichtung zur Bestimmung mindestens eines Verkehrsparameters in einem Datenübertragungssystem, das mindestens einen Sender und mindestens einen Empfänger aufweist, wobei der Empfänger mindestens ein Modem (10) mit Entzerrer (11) aufweist, wobei die Vorrichtung eine Verwaltungskarte (TG) enthält, die ausgelegt ist, um einen oder mehrere Verkehrsparameter unter Berücksichtigung des vom Entzerrer (11) gelieferten Entzerrungsfehlers Eᵢ, eines festgelegten Dienstqualitätswerts und einer Beziehung, die die Dienstqualität und den Entzerrungsfehler Eᵢ verbindet, zu bestimmen, **dadurch gekennzeichnet, dass** die Beziehung in Form einer Bank von Daten angegeben wird, die für verschiedene Modems mit Entzerrer erhalten werden, wobei die Datenbank vorerstellt oder während des Betriebs aufgebaut wird.

8. Verwendung des Verfahrens nach einem der Ansprüche 1 bis 6 für die Datenübertragungen im HF-Bereich.

## Claims

1. Method for determining at least one traffic parameter in a data transmission system comprising at least a transmitter and a receiver, the said receiver comprising a modem with equalizer, the method comprising a step in which at least a data item provided by the equalizer, such as the equalization error Eᵢ, is determined and a step in which one or more traffic parameters is or are determined by taking account of the data item provided, of the fixed service quality and of a relation linking the service quality and the equalization error Eᵢ, **characterized in that** the said relation is given in the form of a database obtained for various modems with equalizer, the database being pre-established or constructed during operation.

2. Method according to Claim 1, **characterized in that** the traffic parameter is the transmission data rate Di.

3. Method according to one of Claims 1 and 2, **characterized in that** it comprises a step in which the value of the equalization error Eᵢ is averaged <Eᵢ>.

4. Method according to one of Claims 1 to 3, **characterized in that** the relation is composed of various values of data rate corresponding to intervals of given values of binary error rate and of averaged equalization error <Eᵢ>.

5. Method according to one of Claims 1 to 4, **characterized in that** it uses a protocol of automatic frequency selection type making it possible to obtain several frequency, data rate pairs and a step of selecting a frequency value and/or a data rate value as a function of decision criteria.

6. Method according to one of Claims 1 to 5, **characterized in that** the signals exchanged take the form of a frame comprising a traffic preamble and **in that** the traffic parameter determined is transmitted in the wave form available in the preamble.

7. Device for determining at least one traffic parameter in a data transmission system comprising at least a transmitter and at least a receiver, the receiver comprising at least a modem (10) with equalizer (11), the device comprising a management card (TG) suitable for determining one or more traffic parameters by taking account of the equalization error Eᵢ provided by the equalizer (11), of a fixed service quality value and of a relation connecting the server quality and the equalization error Eᵢ, **characterized in that** the said relation is given in the form of a database obtained for various modems with equalizer, the database being pre-established or constructed during operation.

8. Use of the method according to one of Claims 1 to 6 for the transmission of data in the HF range.
